(19) **Europäisches Patentamt / European Patent Office / Office européen des brevets**

(11) **EP 4 047 774 A1**

(12) **EUROPEAN PATENT APPLICATION**
published in accordance with Art. 153(4) EPC

(43) Date of publication:
**24.08.2022 Bulletin 2022/34**

(21) Application number: **20885012.3**

(22) Date of filing: **08.09.2020**

(51) International Patent Classification (IPC):
*H02J 3/36* (2006.01)     *H02J 3/12* (2006.01)

(52) Cooperative Patent Classification (CPC):
Y02E 60/60

(86) International application number:
**PCT/CN2020/113882**

(87) International publication number:
**WO 2021/088502 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2019   CN 201911084690**

(71) Applicants:
• **NR Engineering Co., Ltd.**
  **Nanjing, Jiangsu 211102 (CN)**
• **NR ELECTRIC CO., LTD.**
  **Jiangning**
  **Nanjing,**
  **Jiangsu 211102 (CN)**

(72) Inventors:
• **LI, Gang**
  **Nanjing, Jiangsu 211102 (CN)**

• **LI, Haiying**
  **Nanjing, Jiangsu 211102 (CN)**
• **LU, Yu**
  **Nanjing, Jiangsu 211102 (CN)**
• **DONG, Yunlong**
  **Nanjing, Jiangsu 211102 (CN)**
• **WANG, Xianrong**
  **Nanjing, Jiangsu 211102 (CN)**
• **ZOU, Kaikai**
  **Nanjing, Jiangsu 211102 (CN)**
• **LI, Jianchun**
  **Nanjing, Jiangsu 211102 (CN)**
• **HU, Xianlai**
  **Nanjing, Jiangsu 211102 (CN)**

(74) Representative: **Grünecker Patent- und Rechtsanwälte**
**PartG mbB**
**Leopoldstraße 4**
**80802 München (DE)**

(54) **CONTROL SYSTEM OF DIRECT-CURRENT ENERGY CONSUMPTION DEVICE AND CONTROL METHOD THEREFOR**

(57)    The present invention discloses a DC control system and a control method for a DC chopper apparatus. The system includes a VSC-HVDC control and protection system and a DC chopper apparatus control system. The method includes the following steps: collecting, by the VSC-HVDC control and protection system, AC and DC signals and a device operating status of a VSC-HVDC transmission system, and transmitting a DC chopper enable/disable instruction and a surplus power to the DC chopper apparatus control system when an AC system fails and an enable/disable condition is satisfied; when the communication is normal, contributing, by the DC chopper apparatus control system, a chopping power according to the DC chopper enable/disable instruction and the surplus power value transmitted from the VSC-HVDC control and protection system and a sta-

tus of the DC chopper apparatus; and when the communication is abnormal, contributing, by the DC chopper apparatus control system according to a DC voltage and a current signal collected by the DC chopper apparatus control system, a chopping power when needed. By means of the technical solution, the required chopping power can be accurately contributed according to different fault types and the communication status of the control system, to stably control the DC voltage during the failure, thereby improving the stability and the reliability of the power transmission system.

EP 4 047 774 A1

FIG. 4

**Description**

**TECHNICAL FIELD**

The present invention belongs to the technical field of Voltage Source Converter based High Voltage Direct Current (VSC-HVDC) Transmission systems, and in particular, to a control system and a control method for a DC chopper apparatus of an offshore Wind connected to VSC-HVDC transmission system.

**BACKGROUND**

In the renewable energy connected to HVDC transmission project, the DC chopper apparatus is a vital device. The DC chopper apparatus is mainly used in application scenarios where renewable energy is transmitted through DC. If the sending end is a renewable energy source such as a wind farm, when the AC system of the receiving-end fails, the energy of the receiving-end transmission power is accumulated on the DC side, causing the DC voltage to rise, and endangering the safe operation of the device. The DC chopper apparatus is installed in the receiving-end converter station, with the purpose of ensuring that the DC chopper apparatus can be enabled when the receiving-end AC fails, thereby ensuring the stable operation of the system.

The technical solution disclosed in the document (CN108258723 A) is to enable a DC chopper apparatus on the AC side to achieve the purpose of installing a braking resistor on the AC side to consume surplus power when the DC transmission line fails. This technical solution is feasible in onshore wind farms. When the solution is applied to offshore platforms, the installation of AC chopper apparatus on the offshore sending end will increase the economic cost. Therefore, the solution is not suitable for the offshore VSC-HVDC transmission system.

The technical solution disclosed in the document (CN107994613 B) is that it is determined, by detecting the voltage on the DC side, whether the DC chopper apparatus is enabled or disabled. When the voltage on the DC side is higher than 1.15 pu, the DC chopper apparatus is enabled, and when the voltage on the DC side is lower than 0.9 pu, the DC chopper apparatus is disabled. During the actual engineering, the valve side fault may also cause the DC side voltage to be higher than 1.15 pu or even higher. At this point, if the DC chopper apparatus is enabled, the DC chopper apparatus will be caused to work at a higher current and use higher-level devices, which increases the device investment. Therefore, it is impossible to accurately determine the fault type only by using the DC voltage, and the malfunction of the apparatus may be caused.

The technical solution disclosed in the document (CN107994613 B) is to determine the fault type by detecting the AC and DC voltages, but the determination of the fault type is not used for the control of the chopper module but for the control mode conversion of the MMC.

It can be learned from the above documents that none of the documents disclose how to avoid the accidental enable/disable of the DC chopper apparatus and how to deal with the relationship with the VSC-HVDC control and protection system.

The chopper apparatus itself can detect the DC bus voltage and the current of the chopper branch. In the past, the strategy that the DC chopping contribution condition is determined by only relying on the DC voltage is more likely to cause the erroneous contribution of chopping, thereby increasing the requirements for the chopper device. In addition, two pieces of information such as the DC bus voltage and the current of the chopper branch cannot help the chopper branch accurately determine the type of fault occurring in the DC system, and the surplus power that needs to be consumed cannot be accurately learned either. If the chopper branch is allowed to accurately determine the fault type and calculate the surplus power, to complete this function, it is also necessary to acquire the information about other parts of the VSC-HVDC system. The VSC-HVDC control and protection system itself can accurately determine the fault type and surplus power, and the control and protection system and the control system of the chopper are naturally equipped with optical fiber link channels. Based on costs and engineering feasibility and ease of the use of the original optical fiber channel, the use of VSC-HVDC control protection fault diagnosis and the calculation capability of the surplus power in combination with the control system of the DC chopper device is an economically feasible and better technical solution. Moreover, in order to ensure that the DC chopper apparatus can continue to operate when the communication between the DC chopper apparatus and the control and protection system is abnormal, the present invention provides a local control method for the DC chopper apparatus after the communication fault, to ensure the power transmission reliability of the VSC-HVDC system

**SUMMARY**

The present invention is intended to provide a DC control system and a control method for a DC chopper apparatus. In this way, the required chopping power can be accurately contributed according to different fault types and the communication status of the control system, so as to stably control the DC voltage during the failure, thereby improving the stability and the reliability of the power transmission system.

In order to achieve the above objective, the solution of the present invention is as follows.

The control system of a DC chopper apparatus includes a VSC-HVDC control and protection system and a DC chopper apparatus control system.

The VSC-HVDC control and protection system is configured to collect AC and DC signals and a device operating status of a VSC-HVDC transmission system, and transmit a DC chopper enable/disable instruction and a surplus power to the DC chopper apparatus control system when an AC system fails and an enable/disable condition is satisfied;

the DC chopper apparatus control system is connected to the DC chopper apparatus, and is configured to collect a status of the DC chopper apparatus and transmit a control command to a chopper as required;

when the communication is normal, receiving, by the DC chopper apparatus control system, the DC chopper enable/disable instruction and the surplus power value transmitted from the VSC-HVDC control and protection system, and contributing a matched chopping power in combination with the status of the DC chopper apparatus; and

when the communication is abnormal, determining, by the DC chopper apparatus control system according to a DC voltage and a current signal collected by the DC chopper apparatus control system, whether to enable the DC chopper apparatus, and contributing a corresponding chopping power when needed.

The VSC-HVDC control and protection system communicates with the DC chopper apparatus control system by using an optical fiber.

The chopper apparatus control system is connected to the DC chopper apparatus using an optical fiber or a cable.

A control method based on the control system of a DC chopper apparatus as described above includes the following steps:

step 1: collecting, by the VSC-HVDC control and protection system, AC and DC signals and a device operating status of a VSC-HVDC transmission system, and transmitting a DC chopper enable/disable instruction and a surplus power to the DC chopper apparatus control system when an AC system fails and an enable/disable condition is satisfied;

step 2: when the communication is normal, receiving, by the DC chopper apparatus control system, the DC chopper enable/disable instruction and the surplus power value transmitted from the VSC-HVDC control and protection system, and contributing a matched chopping power in combination with a status of the DC chopper apparatus; and when the communication is abnormal, determining, by the DC chopper apparatus control system according to a DC voltage and a current signal collected by the DC chopper apparatus control system, whether to enable the DC chopper apparatus, and contributing a corresponding chopping power when needed.

In step 1, the enable/disable condition is that the surplus power is greater than a first chopping contribution set value, and the DC voltage is greater than or equal to the chopping contribution set value for a duration of $T_{m\_set1}$.

In step 1, a calculation method for the surplus power is $P_{rest} = P_{send} - P_{dc} - P_{loss}$, where $P_{rest}$ is the surplus power, $P_{send}$ is a current transmission power of a sending end of the DC system, $P_{dc}$ is an actual transmission power of a receiving-end converter station during the failure, and $P_{loss}$ is a loss of a DC cable and the converter station.

In step 2, the control system of a DC chopper apparatus calculates a chopping contribution reference quantity $P_{rest}/P_{cm}$ after receiving the surplus power $P_{rest}$ and the enable instruction, where $P_{cm}$ is a divisible minimum chopping power, and obtains an accurate chopping contribution quantity by using a proportional relationship or by PI tuning of the reference quantity according to a difference between a real-time bus voltage and a control voltage during the chopping contribution and contributes corresponding chopping.

The VSC-HVDC control and protection system transmits a disable instruction to the DC chopper apparatus control system after detecting elimination of the fault, and the DC chopper apparatus control system controls the DC chopper apparatus to disable chopping after receiving the disable instruction.

In step 2, if the communication between the VSC-HVDC control and protection system and the DC chopper apparatus control system is abnormal, when the DC voltage is greater than or equal to a second chopping contribution set value $Udc_{chop\_set2}$ for a duration of $T_{m\_set2}$, the DC chopper apparatus is enabled, and chopping is contributed according to a correspondence between $Udc_{chop\_set3} \to Udc_{chop\_set2}$ and $0 \to N$ chopping quantities, wherein N corresponds to a nominal chopping quantity, and $Udc_{chop\_set3}$ is a chop disable set value.

In step 2, if the communication between the VSC-HVDC control and protection system and the DC chopper apparatus control system is abnormal, when the DC voltage is less than the chopper disable set value for a duration of $T_{m\_set3}$, the DC chopper apparatus is disabled.

With the application of the above solutions, beneficial effects of the present invention are as follows:

(1) When the communication between the VSC-HVDC control and protection system and the control system of the chopper is normal, the characteristic of the global monitoring of the VSC-HVDC control and protection system is fully utilized and the control system of the DC chopper apparatus is combined, to realize the accurate enable/disable of the DC chopper apparatus. In addition, the erroneous enable/disable of the DC chopper apparatus is avoided, and the oscillation process when the fault just occurs is avoided, so as to reach the stable state faster.

(2) After the communication fault, a local control strategy for the adaptive communication status of the DC chopper apparatus is provided, to avoid the forced disabling of the operation when the communication of the DC chopper apparatus is abnormal, reducing the risk of outage of the DC transmission system.

## BRIEF DESCRIPTION OF THE DRAWINGS

FIG. 1 is a schematic diagram of a wind power transmission DC system and a fault range according to the present invention.

FIG. 2 is a main circuit diagram of one of the DC chopper apparatuses used in the wind power transmission DC system.

FIG. 3 is a schematic diagram of a DC chopper apparatus control system according to the present invention.

FIG. 4 is a control flowchart of a DC chopper apparatus according to the present invention.

## DETAILED DESCRIPTION

The technical solutions and beneficial effects of the present invention are described in detail below with reference to the accompanying drawings.

The present invention provides a control system of a DC chopper apparatus. The control system of a DC chopper apparatus includes a VSC-HVDC control and protection system and a DC chopper apparatus control system. The VSC-HVDC control and protection system and the DC chopper apparatus control system communicate by using an optical fiber. The VSC-HVDC control and protection system detects information such as a DC voltage, an AC voltage, a DC current, a bridge arm voltage, and a bridge arm current of a converter station, determines the system status and the fault type and status, calculates the surplus power, decides to contribute chopping, and transmits an enable/disable command to the chopper system.

The VSC-HVDC control and protection system is the entire control system for VSC-HVDC transmission, and is configured to collect AC and DC signals of the VSC-HVDC transmission system and the device operating status to monitor a real-time status of the entire system. When the VSC-HVDC control and protection system detects that the AC system fails, and the surplus power is detected to be greater than a DC chopping contribution set value: $P_{rest} \geq P_{chop\_set1}$, the DC voltage greater than or equal to the chopping contribution set value 1 is satisfied: $U_{dc} \geq Udc_{chop\_set1}$ for a duration of $T_{m\_set1}$, the VSC-HVDC control and protection system transmits an enable instruction and the surplus power value to the DC chopper apparatus control system. At this point, the control system of a DC chopper apparatus calculates a chopping contribution reference quantity $P_{rest}/P_{cm}$ after receiving the $P_{rest}$ and the enable instruction, where $P_{cm}$ is a divisible minimum chopping power, and obtains an accurate chopping contribution quantity by using a proportional relationship or by PI tuning of the reference quantity according to a difference between a real-time bus voltage and a control voltage during the chopping contribution and contributes corresponding chopping. The VSC-HVDC control and protection system transmits a disable instruction to the DC chopper apparatus after detecting elimination of the fault. The chopper apparatus is disabled for chopping after receiving the disable instruction.

The chopper apparatus control system is connected to the DC chopper apparatus by using an optical fiber or a cable, and is configured to collect a DC chopper apparatus status, and transmit a control command to a chopper as required, so as to realize the monitoring and control of the DC chopper apparatus. In this way, the DC chopper apparatus control system can measure the DC voltage and the current of the chopper branch. When a communication between the VSC-HVDC control and protection system and the DC chopper apparatus control system is abnormal, when the DC voltage is greater than or equal to the chopping contribution set value 2: $U_{dc} \geq Udc_{chop\_set2}$ for a duration of $T_{m\_set2}$, the DC chopper apparatus is enabled, and chopping is contributed according to a correspondence between $Udc_{chop\_set3}$ →- $Udc_{chop\_set2}$ and 0 →- $N$ chopping quantities, where N corresponds to a nominal chopping quantity.

When the communication between the VSC-HVDC control system and the DC chopper apparatus control system is abnormal, when the DC voltage is less than the chop disable set value: $U_{dc} < Udc_{chop\_set3}$ for a duration of $T_{m\_set3}$, the DC chopper apparatus is disabled.

When an AC fault is detected in the converter station, the VSC-HVDC control and protection system calculates the surplus power and the DC voltage. If the surplus power is greater than the set value and the DC voltage rises, an enable instruction is transmitted to the DC chopper apparatus. In addition, the control and protection system transmits the calculated surplus power or a quantity of sub-modules to the control system of the DC chopper apparatus.

The calculation formula for the surplus power is as follows:

$$P_{rest} = P_{send} - P_{dc} - P_{loss}$$

In the formula, $P_{rest}$ is the surplus power, $P_{send}$ is a current transmission power of a sending end of the DC system, $P_{dc}$ is an actual transmission power of a receiving-end converter station during the failure, and $P_{loss}$ is a loss of a DC cable and the converter station. $P_{loss}$ may also be set to 0, and the loss of the DC cable and the converter station are calculated for the chopping power contribution set value.

Under normal circumstances, a case that $P_{dc} \approx P_{send}$ always exists, that is, $P_{rest} \approx 0$. When a fault occurs on a sending end of an AC side, the transmission capacity of $P_{dc}$ is limited. At this point, the case that $P_{rest} \geq P_{chop\_set}$ will occur. In combination with the DC voltage increase ($U_{dc} \geq Udc_{chop\_set}$), the DC chopper apparatus requires to be enabled to consume the surplus power. $P_{chop\_se} > P_{loss}$, and $Udc_{chop\_set}$ is set to be greater than the DC voltage set value of the receiving terminal.

The following table shows the DC transmission power upper limit and the chopper enable/disable strategy under different metallic fault types of the receiving-end near-end AC system.

| Fault type | Transmission capacity of the receiving-end converter station | Enable/disable strategy |
|---|---|---|
| | | $P_{rest} \geq P_{chop\_set}$ $U_{dc} \geq Udc_{chop\_set}$ |
| Single-phase metallic grounding | 2/3 nominal power | Contribution |
| Two-phase metallic fault | 1/3 nominal power | Contribution |
| Three-phase grounding metallic fault | 0 | Contribution |

After the fault is cleared or the fault is eliminated, the control and protection system determines, according to the AC system voltage, that the fault has been eliminated, and issues a disable instruction to the DC chopper apparatus to avoid failure to disable or disable by mistake under certain conditions of chopping.

The DC chopper apparatus is a distributed chopper apparatus in which power devices/modules and chopper resistors are all distributed and arranged, or a hybrid chopper apparatus in which power devices/modules are distributed and chopper resistors are arranged in a centralized manner. More modules equipped for the DC chopper apparatus lead to larger power consumed by the DC chopper apparatus.

The chopper apparatus control system keeps communicating with the VSC-HVDC control and protection system at all times, and detects the communication status. When the communication is normal, the control plan is as follows.

The control system of the DC chopper apparatus receives the enable instruction and the surplus power value of the VSC-HVDC control and protection system. After the chopping contribution, the DC chopper apparatus is started, and a quantity of enabled sub-modules is determined according to the auxiliary DC voltage of the surplus power, so as to control the DC voltage at the nominal voltage or a certain voltage value to ensure the stable operation of the system.

The control system of the DC chopper apparatus receives the chop disable instruction of the VSC-HVDC control and protection system, and the DC chopper apparatus reduces the quantity of enabled sub-modules at a predetermined rate until the quantity of enabled sub-modules is 0 and the entire chopper apparatus is disabled.

The control system of the DC chopper apparatus keeps communicating with the VSC-HVDC control and protection system at all times, and detects the communication status. When the communication is abnormal,
the DC chopper apparatus automatically enters autonomous control. The chopper apparatus detects the DC bus voltage. When the bus voltage is higher than a first threshold, the control and protection apparatus is put into operation, and the voltage is controlled between the first threshold and a second threshold. The second threshold is greater than the nominal value of the DC bus voltage and less than the first threshold. In order to achieve the control goal, the control system of the DC chopper apparatus can adopt pure proportional control or PI control.

When the fault is eliminated, the receiving-end converter station restores the DC voltage control capability, and will control the DC voltage to the nominal voltage, so that the DC voltage drops below the second threshold, and the DC chopper apparatus will be automatically disabled.

Regardless of the communication process, the control strategy can automatically adapt to the control. When the communication is normal, the global sampling advantage of the VSC-HVDC control and protection system is brought into full play, the chop enabling/disabling is accurately controlled, and the DC voltage is stably controlled. When the communication is abnormal, a chopping adaptive control strategy is adopted to achieve the DC voltage control.

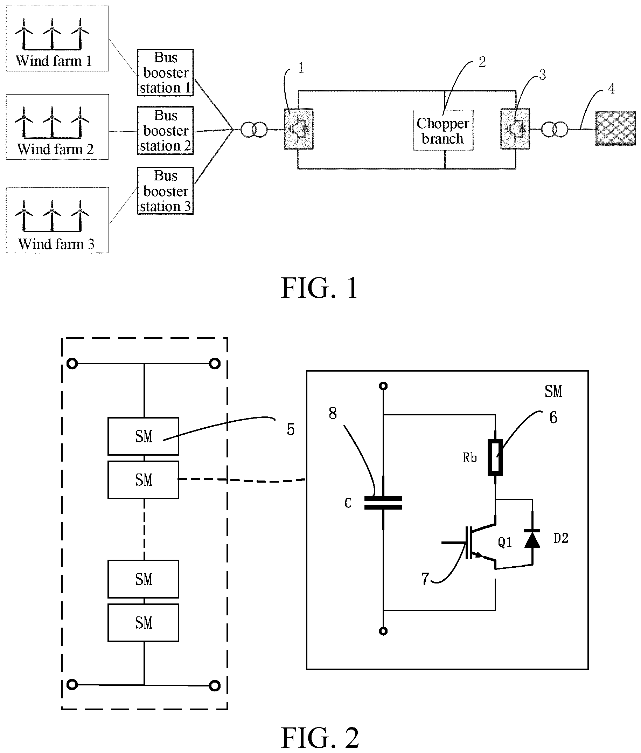

A wind power transmission DC transmission system is shown in FIG. 1, and consists of an offshore wind farm, a booster station, an offshore VSC-HVDC converter station 1, a DC cable, a DC chopper apparatus 2, an onshore VSC-HVDC converter station 3, and an onshore AC power grid 4. The DC chopper apparatus 2 is installed on a side of the onshore VSC-HVDC converter station 3.

In this embodiment, a distributed chopper apparatus shown in FIG. 2 is used as an example for description. The chopper apparatus may also be a hybrid chopper apparatus in which power devices/modules are in a distributed arrangement and chopper resistors are in a centralized arrangement. The DC chopper apparatus in FIG. 2 is composed of a plurality of sub-modules 5 in series. Basic components of each sub-module are composed of a chopper resistor 6, an energy storage capacitor 8, and a controllable device 7. By controlling the conduction of the controllable device 7, the chopper resistor is enabled to absorb power.

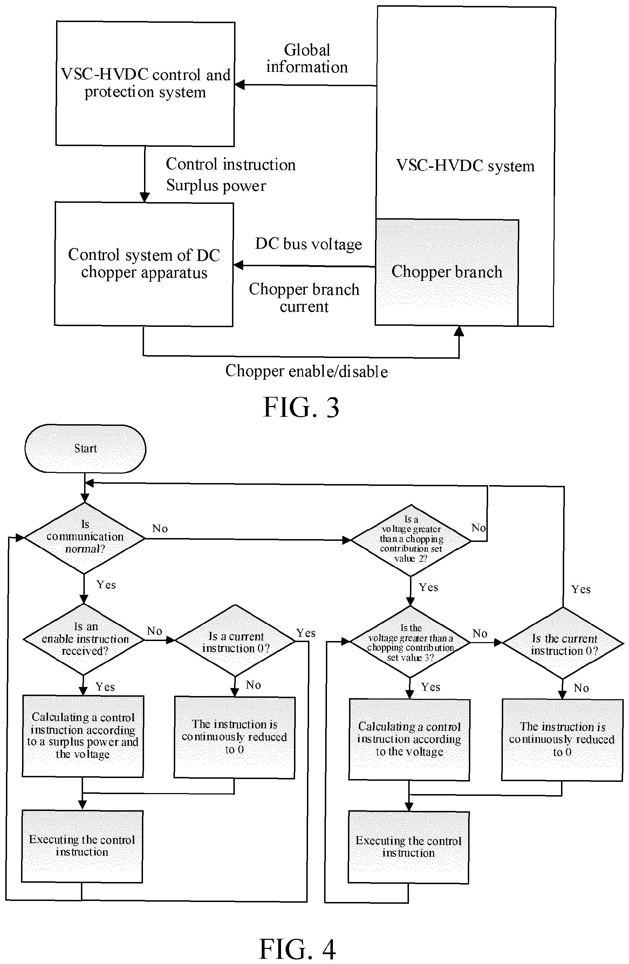

FIG. 3 is a schematic diagram of an overall structure of a chopping control system that is provided. The chopping control system provided in the present invention is composed of a VSC-HVDC control and protection system and a DC chopper apparatus control system. When the communication is normal, the DC chopper apparatus control system receives a DC chopper enable/disable instruction issued by the VSC-HVDC control and protection system and the surplus power, and enables almost the same quantity of chopper sub-modules as the surplus power according to the chopper enable/disable command and the surplus power, to control the DC voltage.

In FIG. 3, when the communication between the VSC-HVDC control and protection system and the DC chopper apparatus control system is normal, the VSC-HVDC control and protection system determines whether the chopping is contributed and the surplus power, to avoid the misuse of the DC chopper apparatus and accurately calculate the quantity of enabled chopper apparatus, and reduce DC voltage fluctuations. The control method is shown in the process of FIG. 4. The VSC-HVDC control and protection system first monitors, by monitoring the AC voltage, whether an AC fault occurs. If the AC fault occurs, the VSC-HVDC control and protection system calculates the surplus power and the DC voltage. If the surplus power is greater than the set value and the DC voltage is greater than the chopping contribution set value, an enable instruction is transmitted to the DC chopper apparatus. In addition, the control and protection system transmits the calculated surplus power or a quantity of sub-modules to the DC chopper apparatus control system.

A DC bus voltage control reference value is $U_{dc\_ref}$, a nominal DC voltage in normal operation is set to $U_{dc\_nom}$, a lower limit and an upper limit for operation of the DC bus voltage allowed or expected to be controlled by the system are respectively $U_{dcmin}$ and $U_{dcma}$, the current DC transmission power is $P_{dc}$, the current DC voltage is $U_{dc}$, and the current measured by the DC chopper apparatus is $I_{cp}$. A nominal quantity of sub-modules of the DC chopper apparatus is N, and an average voltage of the sub-module is $\frac{U_{dc}}{N}$. A sub-module consumes the power of $P_{cm} = (\frac{U_{dc}}{N})^2 \cdot \frac{1}{R}$ when being enabled for chopping.

The calculation formula for the surplus power is as follows:

$$P_{rest} = P_{send} - P_{dc} - P_{loss}$$

In the formula, $P_{rest}$ is the surplus power, $P_{send}$ is a current transmission power of a sending end of the DC system, $P_{dc}$ is an actual transmission power of a receiving-end converter station during the failure, and $P_{loss}$ is the loss of a DC cable and the converter station. $P_{loss} = 0$ may also be set, and the loss is calculated for the chopping power contribution set value.

When the VSC-HVDC control and protection system detects an AC fault and detects that the rest is greater than the chopping power contribution set value, $P_{rest} \geq P_{chop\_set}$, and the DC voltage simultaneously rises ($U_{dc} \geq Udc_{chop\_set1}$). The VSC-HVDC control protection system issues an enabled chopping instruction and transmits the surplus power to the DC chopper apparatus. After the DC chopper apparatus receives $P_{rest}$ and the enable instruction, the quantity $P_{rest}/P_{cm}$ of enabled sub-modules is calculated, to obtain the basic instruction. On the basis, a tuning instruction based on the difference between the DC voltage and the nominal voltage is added by using a proportional relationship or by PI control to obtain an accurate power instruction.

The VSC-HVDC control and protection system transmits a disable instruction to the DC chopper apparatus after detecting elimination of the fault. The chopper apparatus reduces the quantity of enabled sub-modules at a predetermined rate after receiving the disable instruction until the quantity of enabled sub-modules is 0, and the DC chopper apparatus is disabled.

In the above formula, $P_{chop\_set}$ is in a range of 0-0.8 times the nominal power of the VSC-HVDC, and $Udc_{chop\_set1}$ is in a range of 1.02-1.5 times the nominal voltage of the DC. $U_{dcmax}$ is in a range of 1.05-1.5 times the nominal DC voltage, and $U_{dcmin}$ is in a range of 0.7-0.95 times the nominal DC voltage.

When a communication between the VSC-HVDC control system and the DC chopper apparatus control system is abnormal, the control method is shown in FIG. 4 as follows.

When the communication is interrupted, the DC chopper apparatus cannot receive the fault information determination from the control and protection apparatus. When a fault occurs, the DC voltage rises. At this point, the DC chopper apparatus monitors the DC bus voltage $U_{dc}$. When the DC voltage is higher than $Udc_{chop\_set2}$ for a duration of $T_{m\_set2}$, the DC chopper apparatus is enabled according to the correspondence between $Udc_{chop\_set3} \rightarrow Udc_{chop\_set2}$ and $0 \rightarrow N$ sub-modules. When the N sub-modules are all enabled, the consumed power of the DC chopper apparatus is equal to the nominal transmission power of the DC system. By means of the above method, the DC voltage can be controlled between $Udc_{chop\_set3}$ and $Udc_{chop\_set2}$ during the failure. After the fault is cleared, the power transmission capacity of the receiving-end DC voltage control station is restored, and the DC voltage drops. When the voltage drops to $Udc_{chop\_set3}$ for a duration of $T_{m\_set3}$, the DC chopper apparatus is disabled.

$Udc_{chop\_set2}$ is in a range of 1.02-1.5 times the nominal DC voltage, $Udc_{chop\_set3}$ is in a range of 1.01-1.3 times the nominal DC voltage, and $Udc_{chop\_set3} < Udc_{chop\_set2}$. $T_{m\_set1}$ ranges from 0.5 ms to 500 ms, $T_{m\_set2}$ ranges from 0.5 ms to 500 ms, and $T_{m\_set3}$ ranges from 0.5 ms to 500 ms.

The foregoing embodiments are only used for explaining the technical idea of the present invention, and are not intended to limit the protection scope of the present invention. Any changes made based on the technical solutions and according to the technical idea proposed by the present invention shall fall within the protection scope of the present invention.

**Claims**

1. A control system of a DC chopper apparatus, the system comprising: a control and protection system of VSC-HVDC and a control system of a DC chopper apparatus, wherein

   the control and protection system of VSC-HVDC is configured to collect AC and DC signals and a device operating status of a VSC-HVDC transmission system, and transmit a DC chopper enable/disable instruction and a surplus power to the DC chopper apparatus control system when an AC system fails and an enable/disable condition is satisfied;
   the control system of a DC chopper apparatus is connected to the DC chopper apparatus, and is configured to collect a status of the DC chopper apparatus and transmit a control command to a chopper as required;
   when the communication is normal, receiving, by the control system of a DC chopper apparatus, the DC chopper enable/disable instruction and the surplus power value transmitted from the VSC-HVDC control and protection system, and contributing a matched chopping power in combination with the status of the DC chopper apparatus in order to dissipate the surplus power; and
   when the communication is abnormal, determining, by the DC chopper apparatus control system according to a DC voltage and a current signal collected by the DC chopper apparatus control system, whether to enable the DC chopper apparatus, and contributing corresponding chopping when needed in order to dissipate the surplus power.

2. The control system of a DC chopper apparatus according to claim 1, wherein the VSC-HVDC control and protection system communicates with the DC chopper apparatus control system by using an optical fiber.

3. The control system of a DC chopper apparatus according to claim 1, wherein the DC chopper apparatus control system is connected to the DC chopper apparatus by using an optical fiber or a cable.

4. A control method based on the control system of a DC chopper apparatus according to claim 1, comprising the following steps:

   step 1: collecting, by the VSC-HVDC control and protection system, AC and DC signals and a device operating status of a VSC-HVDC transmission system, and transmitting a DC chopper enable/disable instruction and a surplus power to the DC chopper apparatus control system when an AC system fails and an enable/disable condition is satisfied;
   step 2: when the communication is normal, receiving, by the DC chopper apparatus control system, the DC chopper enable/disable instruction and the surplus power value transmitted from the VSC-HVDC control and protection system, and contributing a matched chopping power in combination with a status of the DC chopper apparatus; and
   when the communication is abnormal, determining, by the DC chopper apparatus control system according to a DC voltage and a current signal collected by the DC chopper apparatus control system, whether to enable the DC chopper apparatus, and contributing a corresponding chopping power when needed.

5. The control method according to claim 4, wherein in step 1, the enable/disable condition is that the surplus power is greater than a first chopping contribution set value, and the DC voltage is greater than or equal to the chopping contribution set value for a duration of $T_{m\_set1}$.

6. The control method according to claim 4, wherein in step 1, a calculation method for the surplus power is $P_{rest} = P_{send} - P_{dc} - P_{loss}$, wherein $P_{rest}$ is the surplus power, $P_{send}$ is a current transmission power of a sending end of the DC system, $P_{dc}$ is an actual transmission power of a receiving-end converter station during the failure, and $P_{loss}$ is a loss of a DC cable and the converter station.

7. The control method according to claim 4, wherein in step 2, the control system of a DC chopper apparatus calculates a chopping contribution reference quantity $P_{rest}/P_{cm}$ after receiving the surplus power $P_{rest}$ and the enable instruction, wherein $P_{cm}$ is a divisible minimum chopping power, and obtains an accurate chopping contribution quantity by using a proportional relationship or by PI tuning of the reference quantity according to a difference between a real-time bus voltage and a control voltage during the chopping contribution and contributes corresponding chopping.

8. The control method according to claim 4, wherein the VSC-HVDC control and protection system transmits a disable instruction to the DC chopper apparatus control system after detecting elimination of the fault, and the DC chopper apparatus control system controls the DC chopper apparatus to disable chopping after receiving the disable instruction.

9. The control method according to claim 4, wherein in step 2, if the communication between the VSC-HVDC control and protection system and the DC chopper apparatus control system is abnormal, when the DC voltage is greater than or equal to a second chopping contribution set value $Udc_{chop\_set2}$ for a duration of $T_{m\_set2}$, the DC chopper apparatus is enabled, and chopping is contributed according to a correspondence between $Udc_{chop\_set3} \rightarrow Udc_{chop\_set2}$ and $0 \rightarrow N$ chopping quantities, wherein $N$ corresponds to a nominal chopping quantity, and $Udc_{chop\_set3}$ is a chop disable set value.

10. The control method according to claim 4, wherein in step 2, if the communication between the VSC-HVDC control and protection system and the DC chopper apparatus control system is abnormal, when the DC voltage is less than the chop disable set value for a duration of $T_{m\_set3}$, the DC chopper apparatus is disabled.

FIG. 1

FIG. 2

FIG. 3

FIG. 4

# EP 4 047 774 A1

<table>
<tr><td colspan="2" align="center"><strong>INTERNATIONAL SEARCH REPORT</strong></td><td colspan="2">International application No.<br><strong>PCT/CN2020/113882</strong></td></tr>
</table>

**A. CLASSIFICATION OF SUBJECT MATTER**

H02J 3/36(2006.01)i; H02J 3/12(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 能量, 消耗, 耗能, 耗散, 卸荷, 电阻, 功率, 盈余, 富余, 柔性, 直流, energy, consum +, power, surplus, flexible, direct, FACTS

**C. DOCUMENTS CONSIDERED TO BE RELEVANT**

| Category* | Citation of document, with indication, where appropriate, of the relevant passages | Relevant to claim No. |
|---|---|---|
| PX | CN 110932304 A (NANJING NARI-RELAYS ENGINEERING TECHNOLOGY CO., LTD. et al.) 27 March 2020 (2020-03-27)<br>claims 1-10 | 1-10 |
| A | CN 107834588 A (NR ELECTRIC CO., LTD. et al.) 23 March 2018 (2018-03-23)<br>description, paragraphs 69-97, and figures 1-5 | 1-10 |
| A | CN 108233346 A (MAINTENANCE BRANCH OF STATE GRID JIBEI ELECTRIC POWER COMPANY LIMITED et al.) 29 June 2018 (2018-06-29)<br>entire document | 1-10 |
| A | CN 109861269 A (XI'AN XJ POWER ELECTRONICS TECHNOLOGY CO., LTD.) 07 June 2019 (2019-06-07)<br>entire document | 1-10 |
| A | CN 107181274 A (NR ELECTRIC CO., LTD. et al.) 19 September 2017 (2017-09-19)<br>entire document | 1-10 |
| A | CN 108539796 A (HUAZHONG UNIVERSITY OF SCIENCE AND TECHNOLOGY et al.) 14 September 2018 (2018-09-14)<br>entire document | 1-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 November 2020** | **27 November 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/113882** |

**C.    DOCUMENTS CONSIDERED TO BE RELEVANT**

| Category* | Citation of document, with indication, where appropriate, of the relevant passages | Relevant to claim No. |
| --- | --- | --- |
| A | DE 102018008224 A1 (DAIMLER AG) 11 April 2019 (2019-04-11)<br>    entire document | 1-10 |
| A | US 2012086415 A1 (THE POWERWISE GROUP, INC.) 12 April 2012 (2012-04-12)<br>    entire document | 1-10 |

Form PCT/ISA/210 (second sheet) (January 2015)

**INTERNATIONAL SEARCH REPORT**
Information on patent family members

International application No.

**PCT/CN2020/113882**

| Patent document cited in search report | | | Publication date (day/month/year) | Patent family member(s) | | | Publication date (day/month/year) |
|---|---|---|---|---|---|---|---|
| CN | 110932304 | A | 27 March 2020 | None | | | |
| CN | 107834588 | A | 23 March 2018 | WO | 2019096048 | A1 | 23 May 2019 |
| CN | 108233346 | A | 29 June 2018 | CN | 108233346 | B | 03 January 2020 |
| | | | | CN | 208078639 | U | 09 November 2018 |
| CN | 109861269 | A | 07 June 2019 | None | | | |
| CN | 107181274 | A | 19 September 2017 | None | | | |
| CN | 108539796 | A | 14 September 2018 | None | | | |
| DE | 102018008224 | A1 | 11 April 2019 | None | | | |
| US | 2012086415 | A1 | 12 April 2012 | US | 8723488 | B2 | 13 May 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108258723 A

- CN 107994613 B